# EUROPÄISCHE PATENTSCHRIFT

(11) **EP 2 197 585 B1**
(45) Veröffentlichungstag und Bekanntmachung des Hinweises auf die Patenterteilung: **01.04.2015**
(21) Anmeldenummer: 08838990.3
(22) Anmeldetag: 13.10.2008
(51) Int. Cl.: B01L 3/02, G01N 35/10

(54) **DOSIEREINRICHTUNG FÜR FLÜSSIGKEITEN**
DOSING DEVICE FOR LIQUIDS
DISPOSITIF DE DOSAGE DE LIQUIDES

(30) Priorität: 11.10.2007 DE 202007014286 U
(43) Veröffentlichungstag der Anmeldung: 23.06.2010
(73) Patentinhaber: BRAND GMBH + CO KG, 97877 Wertheim (DE)
(72) Erfinder: MAHLER, Peter H., 97892 Kreuzwertheim (DE); STRICKER, Thomas, 97877 Wertheim (DE); SIEBERT, Harry, 97264 Helmstadt (DE); ALBRECHT, Eberhard, 97877 Wertheim (DE)
(74) Vertreter: Von Rohr Patentanwälte Partnerschaft mbB
(86) Internationale Anmeldenummer: PCT/EP2008/008639
(87) Internationale Veröffentlichungsnummer: WO 2009/049842

(56) Entgegenhaltungen:
- DE-A1- 19 906 409
- DE-B1- 2 407 101
- DE-U1- 9 003 629
- US-A- 3 572 552

## Beschreibung

Die Erfindung betrifft eine Dosiereinrichtung für Flüssigkeiten mit den Merkmalen des Oberbegriffs von Anspruch 1.

Die Erfindung bezieht sich insgesamt auf eine Dosiereinrichtung für Flüssigkeiten, wie sie in halbautomatischen oder vollautomatischen Produktionsdosieranlagen zur Probenbefüllung o.dgl. insbesondere in der biologischen, chemischen und pharmazeutischen Industrie eingesetzt werden. Über ein Mehrkanalsystem aus mehreren nebeneinander angeordneten Dosiereinheiten werden gleichzeitig mehrere nebeneinander angeordnete Probenbehälter mit der gewünschten Flüssigkeit befüllt.

Nach Abschluß eines Dosierzyklus oder eines Dosierzeitraumes und bei Wechsel der zu dosierenden Flüssigkeit müssen alle mit der Flüssigkeit in Kontakt kommenden Teile der Dosieranlage gereinigt, ggf. autoklaviert oder sterilisiert werden. Das ist bei manchen Flüssigkeiten ausgesprochen schwierig, so daß bereits eine anwendungstechnisch und reinigungstechnisch verbesserte Dosieranlage vorgeschlagen worden ist (Prospekt BRAND "Dosieranlagen und -systeme" 9944-93, 10/0903; WO-A-00/49418 und DE 199 06 409 A1). Teil einer solchen Dosieranlage ist eine Dosiereinrichtung für die zu dosierende Flüssigkeit. Diese Dosiereinrichtung ist mit einem Flüssigkeits-Vorratsbehälter oder einer Vorratsleitung ständig verbunden. Die Dosiereinrichtung ist mit für den Betrieb erforderlichen elektrischen Einrichtungen, Antrieben und diversen Leitungen ausgerüstet.

Die bekannte Dosiereinrichtung, von der die Erfindung ausgeht (DE 199 06 409 A1), weist eine Verteilerschiene und mehrere mit der Verteilerschiene hydraulisch verbundene Dosiereinheiten für die zu dosierende Flüssigkeit auf. Typisch ist eine Anzahl von fünf Dosiereinheiten, die auf einer Verteilerschiene angeordnet sind. Jede Dosiereinheit weist eine Ventileinheit sowie eine auf der Ventileinheit lösbar angeordnete Kolben-Zylinder-Einheit auf, Typischerweise hat die Ventileinheit ein Ansaugventil, ein Ausstoßventil und eine seitlich abragende, von der Ventileinheit abnehmbare Ausstoßkanüle. Jede Ventileinheit weist ein hydraulisches Anschlußelement zum lösbaren hydraulischen Anschluß an die Verteilerschiene auf. Die Verteilerschiene selbst weist eine langgestreckte Fluidzufuhrleitung auf, die endseitig einen Zulaufanschluß für die Flüssigkeit und seitlich über die Länge verteilt, regelmäßig in gleichen Abständen angeordnet, Dosiereinheitsanschlüsse aufweist, die mit den hydraulischen Anschlußelementen der Dosiereinheiten lösbar gekuppelt sind.

Die zuvor gegebene Beschreibung der Dosiereinrichtung wie auch die nachfolgend gegebene Beschreibung der Dosiereinrichtung gehen davon aus, daß die Dosiereinrichtung insgesamt zusammengebaut ist. An sich miteinander lösbar verbundene Teile sind miteinander verbunden. So werden die Zusammenhänge dargestellt.

Der Dosiereinrichtung zugeordnet ist eine motorische Antriebseinrichtung, die über eine Koppeleinrichtung mit Anschlußköpfen an den Kolbenstangen der Kolben-Zylinder-Einheiten lösbar gekuppelt ist. Durch Bewegung der Koppeleinrichtung können alle Kolbenstangen der nebeneinanderstehenden Kolben-Zylinder-Einheiten synchron angehoben und abgesenkt werden im Sinne eines Ansaugens und dosierenden Ausstoßens der Flüssigkeit.

Bei der bekannten, den Ausgangspunkt für die Lehre der Erfindung darstellenden Dosiereinrichtung ist die Verteilerschiene als Block aus einem sterilisierbaren und autoklavierbaren Metall, insbesondere aus Aluminium oder Edelstahl hergestellt. Die Fluidzufuhrleitung und die Dosiereinheitsanschlüsse sind in dem Block ausgebildet, An dieser Verteilerschiene befinden sich auch seitlich beabstandete Hakenleisten, die mechanische Verbindungselemente bilden, mit denen entsprechende mechanische Verbindungselemente an den Dosiereinheiten lösbar in Eingriff stehen. Die blockartige Verteilerschiene bildet also einerseits die Fluidzuführung für die Dosiereinheiten, andererseits den mechanischen Träger der Dosiereinheiten.

Bei der bekannten Dosiereinrichtung hat man bereits Maßnahmen getroffen, um diese hinsichtlich der Reinigung zu optimieren. Dort ist nämlich vorgesehen, daß die Kolben-Zylinder-Einheiten als Austauschteile aus vorzugsweise recyclingfähigem und vorzugsweise spritzgießfähigem Kunststoff ausgebildet und auswechselbar eingesetzt sind. Ferner ist vorgesehen, daß auch die Ventileinheiten, jedenfalls ganz überwiegend, als Austauschteile aus vorzugsweise recyclingfähigem und vorzugsweise spritzgießfähigem Kunststoff ausgeführt sind. Dadurch wird erreicht, daß nur noch die aufwendige und hochwertige Verteilerschiene gereinigt und vorzugsweise sterilisiert und/oder autoklaviert werden muß. Alle Anbauteile können schnell ausgetauscht werden.

Der Erfindung liegt nun das Problem zugrunde, die bekannte Dosiereinrichtung hinsichtlich der Konstruktion der Verteilerschiene zu verbessern.

Das zuvor aufgezeigte Problem wird bei einer Dosiereinrichtung für Flüssigkeiten mit den Merkmalen des Oberbegriffs von Anspruch 1 durch die Merkmale des kennzeichnenden Teils von Anspruch 1 gelöst.

Vorgesehen ist, daß die Verteilerschiene als Austauschteil aus einem vorzugsweise recyclingfähigen, vorzugsweise spritzgießfähigen Kunststoff ausgebildet ist.

Ein Austauschteil im Sinne der vorliegenden Erfindung ist ein Massenprodukt aus einer werkzeuggebundenen Herstellung. Die Präzision des Produkts ist Folge der Investition in das Herstellungswerkzeug. Das Austauschteil selbst ist dann in der Herstellung kostengünstig, obwohl es eng toleriert maßhaltig ist. Optimiert wird dies dadurch, daß als Werkstoff ein kostengünstiger Kunststoff verwendet wird.

Bisher war man dem Eindruck erlegen, daß die komplexe Konstruktion der Verteilerschiene, die überdies auch noch das mechanische Rückgrat der Dosiereinrichtung bildet, die Verwendung von Metall, insbesondere von Aluminium, ganz besonders von Edelstahl unvermeidbar macht, Versuche der Anmelderin haben jedoch gezeigt, daß man auch die Verteilerschiene als Austauschteil aus Kunststoff ausführen kann, so wie auch die Kolben-Zylinder-Einheiten und die Ventileinheiten. Dadurch ist eine vollständig als Austauschteil ausgeführte Dosiereinrichtung realisierbar, deren Handhabung im Produktionsalltag unter den extremen Anforderungen insbesondere in der pharmazeutischen Industrie wesentlich zweckmäßiger ist.

Auch für die Verteilerschiene entfällt eine Reinigung. Risiken nicht ausreichender Reinigung und Risiken von Rückständen an Spül- oder Desinfektionsmitteln in der Verteilerschiene werden systematisch vermieden. Auch die aufwendige diesbezügliche Dokumentation erübrigt sich. Stillstandzeiten der entsprechenden Anlagen werden deutlich reduziert.

Es hat sich gezeigt, daß man die Verteilerschiene vom Sterilisieren bis zum Einbau kaum steril halten kann. Erfindungsgemäß kann die gesamte Dosiereinrichtung ohne Demontage entsorgt und eine Auswechsel-Dosiereinrichtung aus Verteilerschiene, Ventileinheiten und Kolben-Zylinder-Einheiten eingesetzt werden. Diese kann zuvor am Einsatzort, beispielsweise in einer Schleuse vor dem sterilen Arbeitsbereich, ausgepackt und dann in den sterilen Arbeitsbereich verbracht werden.

Die Verwendung von Kunststoff hat den besonderen Vorteil, daß dieser mit zertifiziertem Grad strahlensterilisiert werden kann, so daß der insbesondere in der Biologie und Pharmazie erforderliche präzise Nachweis der Keimfreiheit gut erbracht werden kann. Spritzgießfähiger Kunststoff hat dabei den weiteren Vorteil, daß das Fertigteil bereits praktisch keimfrei mit hoher Temperatur aus dem Spritzgußwerkzeug kommt.

Weiter ist bei der Lehre der Erfindung vorgesehen, daß die Verteilerschiene aus einzelnen Schienensegmenten zusammengefügt ist. Die Anschlüsse der Schienensegmente sind dabei als fluiddichte Steck- und/oder Flanschverbindungselemente ausgeführt.

Eine langgestreckte Verteilerschiene mit einer Vielzahl von Dosiereinheitsanschlüssen bedarf eines komplexen und somit teuren Kunst-Spritzgusswerkzeugs. Das ist erfindungsgemäß dadurch vermieden, daß die Verteilerschiene aus einzelnen Schienensegmenten aufgebaut ist. Man gewinnt dadurch ein modular erweiterbares System auch bei der Verteilerschiene.

Verbindungstechnisch empfiehlt es sich, daß die Schienensegmente über angeformte Flansche, insbesondere Bajonettflansche, derart miteinander verbunden sind, daß im Inneren eine praktisch spaltfreie Fluidzufuhrleitung gebildet ist. Eine praktisch spaltfreie Innenwandung der Fluidzufuhrleitung ist von großer Bedeutung bei entsprechend kontaminierenden Flüssigkeiten und läßt sich durch entsprechende Gestaltung der Schienensegmente auch sicher erreichen.

Bei intelligenter Gestaltung der Schienensegmente kann man erreichen, daß die Schienensegmente weitgehend gleich ausgeführt sind, so daß sie auf einem Kunststoff-Spritzwerkzeug mit auswechselbaren Formhälften herstellbar sind.

Ferner kann man vorsehen, daß die Anschlüsse der Schienensegmente separate oder direkt im Zweikomponenten-Spritzgussverfahren angeformte Dichtelemente aufweisen.

Ferner kann man vorsehen, daß die Verteilerschiene in einer mechanischen, vorzugsweise als Wanne oder Schiene ausgebildeten, langgestreckten TragKonstruktion lösbar angebracht ist.

Da die Tragkonstruktion mit der zu dosierenden Flüssigkeit nicht in Kontakt kommt, kann die Tragkonstruktion im Sterilraum verbleiben. Sie kann auch aus anderem Material als Kunststoff ausgeführt sein. Beispielsweise kann es sich hier um ein Bauteil aus Aluminium oder aus Edelstahl handeln. Lediglich die Verteilerschiene mit der darin integrierten Fluidzufuhrleitung wird mit den Anbaueinheiten ausgewechselt.

Wie im Stand der Technik ist es zweckmäßig, daß jede Dosiereinheit mindestens ein mechanisches Verbindungselement zum lösbaren mechanischen Befestigen aufweist. Dabei kann man bei einer auch mechanische Funktionen übernehmenden Verteilerschiene vorsehen, daß die Verteilerschiene mechanische Verbindungselemente aufweist, mit denen die mechanischen Verbindungselemente der Dosiereinheiten lösbar in Eingriff stehen.

Konstruktiv hat es sich als besonders zweckmäßig erwiesen, daß die Verteilerschiene eine angeformte Plattform aufweist, auf der sich die Dosiereinheitsanschlüsse und, vorzugsweise, die mechanischen Verbindungselemente befinden, Die Plattform stabilisiert gleichzeitig die Verteilerschiene in ihrer Tragfunktion, so daß die Wandstärken beispielsweise im Bereich der Fluidzufuhrleitung geringer ausfallen können.

Bereits zum Stand der Technik ist darauf hingewiesen worden, daß sich an einer Dosiereinrichtung der in Rede stehenden Art meistens ein Druckausgleichsbehälter befindet, dessen Füllvolumen im Betrieb auf einen annähernd konstanten Wert geregelt wird, so daß an den hydraulischen Anschlüssen der Ventileinheiten der Dosiereinheiten ein im wesentlichen konstanter Eingangsdruck vorliegt. Das ist für die Dosiergenauigkeit der Dosiereinrichtung zweckmäßig.

Auch bei der erfindungsgemäßen Dosiereinrichtung empfiehlt es sich, daß an der Verteilerschiene ein Druckausgleichsbehälter angeordnet ist, der über einen Behälteranschluß mit der Fluidzufuhrleitung in lösbarer hydraulischer Verbindung steht. Vorzugsweise ist der Behälteranschluß zwischen dem Zulaufanschluß und dem ersten Dosiereinheitsanschluß angeordnet. Dabei ist es besonders zweckmäßig, wenn der Behälteranschluß auch der lösbaren mechanischen Verbindung des Druckausgleichsbehälters mit der Verteilerschiene dient und dazu, vorzugsweise, als Schraubanschluß ausgeführt ist.

Dabei kann es sich empfehlen, daß das dem Druckausgleichsbehälter zugeordnete Schienensegment mit dem Druckausgleichsbehälter einstückig ausgeführt ist.

Hinsichtlich der mechanischen Verbindungselemente an den verschiedenen Stellen der erfindungsgemäßen Dosiereinrichtung empfiehlt sich die Verwendung von Bajonett-, Klemm- oder Schraubverbindungen.

Grundsätzlich kann die Fluidzufuhrleitung der Verteilerschiene am vom Zulaufanschluß fernen Ende offen sein, so daß die Dosiereinrichtung in einen Flüssigkeitskreislauf eingebaut werden kann. Dies kann bei zu temperierenden Flüssigkeiten oder bei Suspensionen notwendig werden. Das kann auch reinigungstechnische Vorteile haben. Besonders vorteilhaft ist es aber, wenn die Fluidzufuhrleitung am vom Zulaufanschluß fernen Ende geschlossen ist.

Zu einem insgesamt recyclingfähigen, auswechselbaren System kommt man mit einer Dosiereinrichtung der in Rede stehenden Art, bei der ferner vorgesehen ist, daß die Kolben-Zylinder-Einheiten als Austauschteile aus vorzugsweise recyclingfähigem, vorzugsweise spritzgießfähigem Kunststoff ausgebildet und auf den Ventileinheiten schnell, sicher, dicht und lösbar und vorzugsweise ohne das Erfordernis von Werkzeugen montierbar und demontierbar angeordnet sind und/oder daß die Ventileinheiten als Austauschteile aus vorzugsweise recyclingfähigem, vorzugsweise spritzgießfähigem Kunststoff ausgebildet sind. Einzelne Einbauteile der Ventileinheiten, z. B. Ventilsitze oder Ventilfedern, können ggf. aus anderen Werkstoffen als Kunststoff bestehen.

Gegenstand der Erfindung ist auch eine Verteilerschiene als solche für eine Dosiereinrichtung für Flüssigkeiten wie sie zuvor beschrieben worden ist, wie in Anspruch 10 festgehalten. Insoweit sind bevorzugte Ausgestaltungen Gegenstand der Ansprüche 11 bis 13.

Generell empfiehlt es sich, daß die mechanischen Verbindungselemente als Rastverbindungselemente oder als bajonettartige, mit einer Dreh- oder Verschiebebewegung öffnende Verbindungselemente ausgeführt sind.

Gegenstand der Erfindung ist schließlich auch für sich ein Schienensegment einer Verteilerschiene für eine Dosiereinrichtung als solches gemäß Anspruch 14. Insoweit ist eine bevorzugte Ausgestaltung dann Gegenstand des Anspruchs 15.

Im folgenden wird die Erfindung nun anhand einer lediglich bevorzugte Ausführungsbeispiele darstellenden Zeichnung näher erläutert. In der Zeichnung zeigt
- Fig. 1: in einer perspektivischen Darstellung, zusammengebaut, ein Ausführungsbeispiel einer Dosiereinrichtung für Flüssigkeiten, das nicht die Erfindung verwirklicht,
- Fig. 2: die Dosiereinrichtung aus Fig. 1 im Querschnitt, allerdings ohne mechanische Tragkonstruktion,
- Fig. 3: die Dosiereinrichtung aus Fig. 1 im Lägsschnitt, ebenfalls ohne Tragkonstruktion,
- Fig. 4: eine Verteilerschiene der Dosiereinrichtung aus Fig. 1 im Längsschnitt,
- Fig. 5: die Verteilerschiene aus Fig. 1 in einer perspektivischen Ansicht,
- Fig. 6: in einer Fig. 1 entsprechenden perspektivischen Darstellung ein Ausführungsbeispiel einer erfindungsgemäßen Dosiereinrichtung, dargestellt ohne mechanische Tragkonstruktion,
- Fig. 7: in einer Fig. 3 entsprechenden Schnittdarstellung die Dosiereinrichtung aus Fig. 6,
- Fig. 8: ein weiteres Ausführungsbeispiel einer erfindungsgemäßen Dosiereinrichtung in einer Fig. 1 entsprechenden perspektivischen Darstellung,
- Fig. 9: die Dosiereinrichtung aus Fig. 8 in einer Fig. 3 entsprechenden Schnittdarstellung, jetzt mit mechanischer Tragkonstruktion,
- Fig. 10: ein Schienensegment der Verteilerschiene des Ausführungsbeispiels von Fig. 8 im Längsschnitt, hier das letzte, geschlossene Schienensegment,
- Fig. 11: das Schienensegment aus Fig. 10 in einer perspektivischen Ansicht,
- Fig. 12: in einer Fig. 10 entsprechenden Darstellung ein Schienensegment mit Behälteranschluß und
- Fig. 13: das Schienensegment aus Fig. 12 in einer perspektivischen Darstellung.

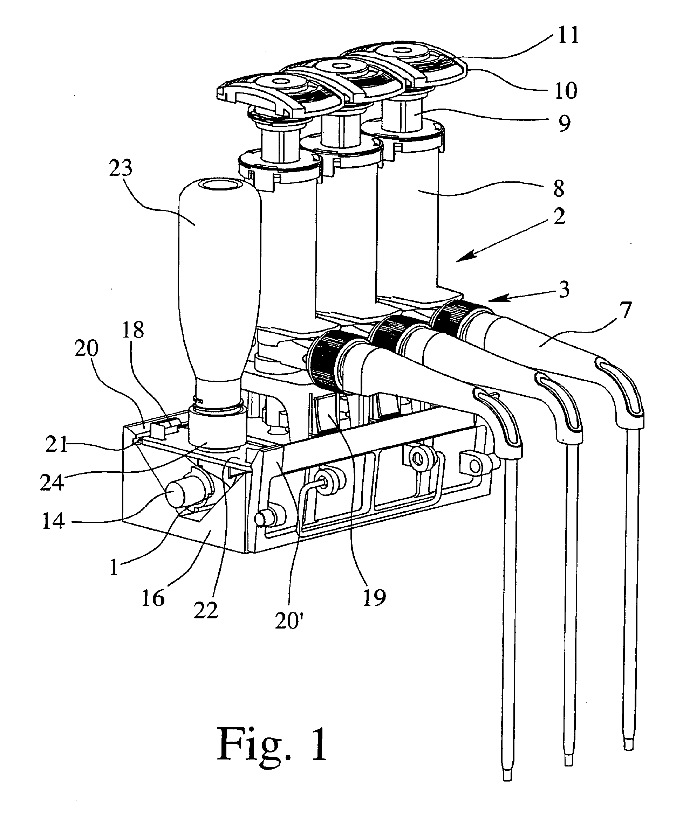

Die in Fig. 1, 6 und 8 in drei verschiedenen Ausführungsbeispielen dargestellte Dosiereinrichtung für Flüssigkeiten ist zum Einbau in eine Produktions-Dosieranlage bestimmt und geeignet. Dazu darf auf die Ausführungen in der Beschreibungseinleitung sowie auf den dort genannten Stand der Technik verwiesen werden.

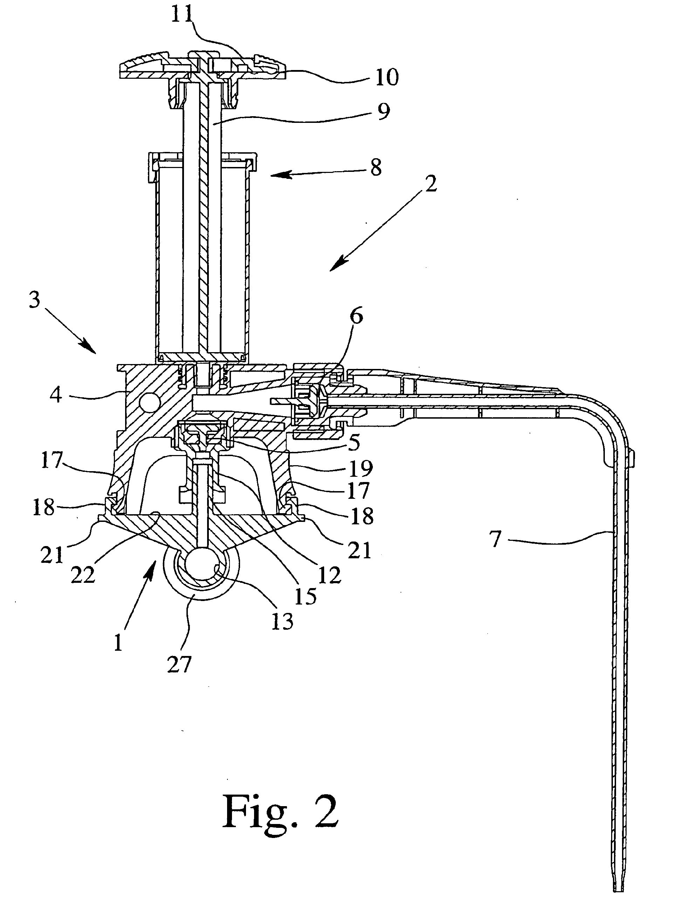

Die in Fig. 1 in perspektivischer Ansicht dargestellte Dosiereinrichtung für Flüssigkeiten weist zunächst eine Verteilerschiene 1 und mehrere mit der Verteilerschiene 1 hydraulisch verbundene Dosiereinheiten 2 für die Flüssigkeit auf. Jede Dosiereinheit 2 umfaßt eine Ventileinheit 3, die typischerweise und vorzugsweise, wie in Fig. 2 dargestellt, ein Ventilgehäuse 4 aufweist, in dem sich ein Ansaugventil 5 und ein Ausstoßventil 6 befinden, wobei sich an das Ausstoßventil 6 eine Ausstoßkanüle 7 anschließt. Das ist eine typische Ventileinheit einer solchen Dosiereinheit, wozu ebenfalls auf den Stand der Technik verwiesen werden darf.

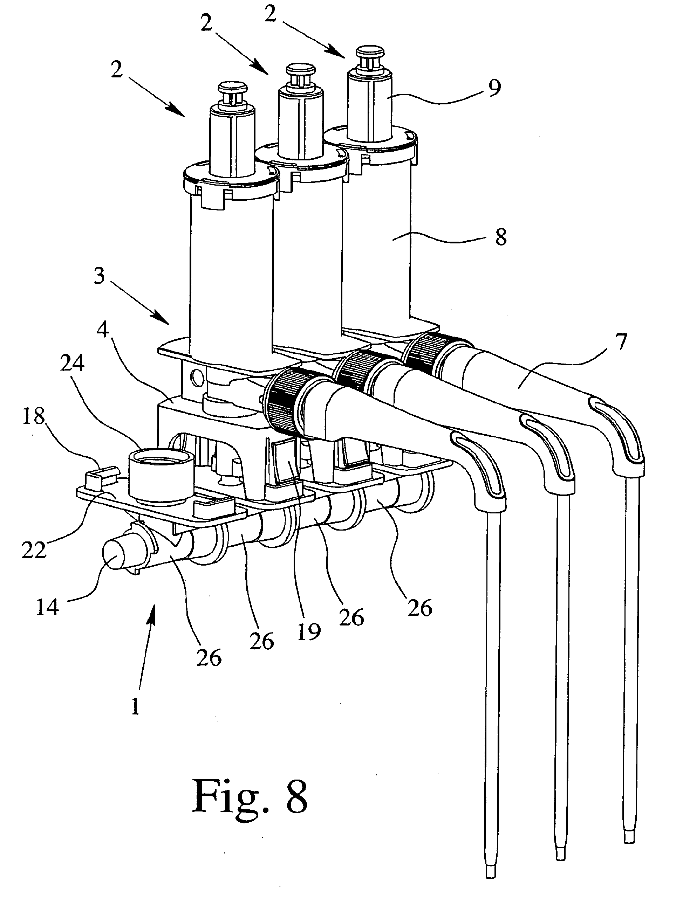

Zu der Dosiereinheit 2 gehört neben der Ventileinheit 3 eine auf der Ventileinheit 3 lösbar angeordnete Kolben-Zylinder-Einheit 8. Der Kolben der Kolben-Zylinder-Einheit 8 ist mit einer Kolbenstange 9 verbunden, die nach oben abragt und am oberen Ende an einem Anschlußkopf 10 befestigt ist. Ein Schieber 11 an dem Anschlußkopf 10 koppelt die Kolbenstange 9 an. Dieser Anschlußkopf 10 mit dem Schieber 11 gehört nicht zu der Kolben-Zylinder-Einheit 8, sondern gehört zu einer Koppeleinrichtung einer nicht dargestellten motorischen Antriebseinrichtung der Dosieranlage. Fig. 8 läßt im dort dargestellten Ausführungsbeispiel erkennen, wie die Enden der Kolbenstangen 9 der Kolben-Zylinder-Einheiten 8 ohne die Anschlußköpfe 10 aussehen.

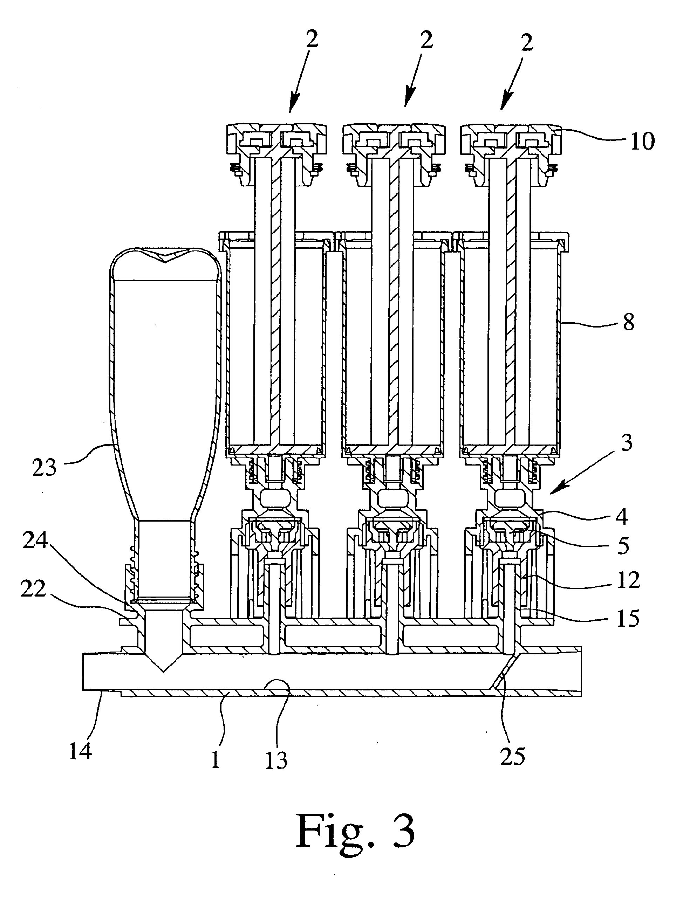

Fig. 2 läßt weiter erkennen, daß jede Ventileinheit 3 ein hydraulisches Anschlußelement 12 zum lösbaren hydraulischen Anschluß an die Verteilerschiene 1 aufweist. Die Verteilerschiene 1 weist eine langgestreckte Fluidzufuhrleitung 13 auf (Fig. 3), die endseitig einen Zulaufanschluß 14 (links in Fig. 1 und 3) für die Flüssigkeit und seitlich über die Länge verteilt und vorzugsweise gleich beabstandet angeordnet mehrere Dosiereinheitsanschlüsse 15 aufweist. In Fig. 3 sieht man die Dosiereinheitsanschlüsse 15 von der Fluidzufuhrleitung 13 nach oben abragen. In Fig. 2 steht der Dosiereinheitsanschluß 15 mit dem hydraulischen Anschlußelement 12 abdichtend im Eingriff.

Die Dosiereinheitsanschlüsse 15 sind also mit den hydraulischen Anschlußelementen 12 hydraulisch dicht und mechanisch lösbar gekuppelt.

Vorgesehen ist nun zunächst, daß die Verteilerschiene 3 als Austauschteil aus einem vorzugsweise recyclingfähigen, vorzugsweise spritzgießfähigen Kunststoff ausgebildet ist. Auch die Komponenten der Ventileinheit 3 und der Kolben-Zylinder-Einheit 8 sind Kunststoffteile, vorzugsweise aus recyclingfähigem und vorzugsweise auch spritzgießfähigem Kunststoff.

Fig. 1 läßt eine Konstruktion der Dosiereinrichtung erkennen, die sich dadurch auszeichnet, daß die Verteilerschiene 1 in einer mechanischen, vorzugsweise als Wanne oder Schiene ausgebildeten, langgestreckten Tragkonstruktion 16 lösbar angebracht ist. Im dargestellten Ausführungsbeispiel ist dabei vorgesehen, daß die mechanische Tragkonstruktion 16 als nicht zum Wegwerfen bestimmtes Bauteil aus Metall oder Kunststoff ausgeführt ist. Insbesondere kann die Tragkonstruktion 16 ein Bauteil aus Aluminium oder Edelstahl sein. Die zusätzliche mechanische Tragkonstruktion 16, die mit der zu dosierenden Flüssigkeit an keiner Stelle in Berührung kommt, kann im Sterilraum verbleiben, muß also nicht ausgewechselt werden. Ausgewechselt werden nur die mit der Flüssigkeit in Kontakt kommenden Bauteile, und zwar in der erfindungsgemäßen, unter den Anforderungen der pharmazeutischen Industrie besonders zweckmäßigen Weise.

Fig. 1 und 2 lassen erkennen, daß im dargestellten und insoweit bevorzugten Ausführungsbeispiel jede Ventileinheit 3 mindestens ein mechanisches Verbindungselement 17 zum lösbaren mechanischen Befestigen der Dosiereinheit 2 aufweist. Man erkennt in Fig. 2 ferner, daß im dargestellten Ausführungsbeispiel die Verteilerschiene 1 mechanische Verbindungselemente 18 aufweist, mit denen die mechanischen Verbindungselemente 17 der Dosiereinheiten 2 lösbar in formschlüssigem Eingriff stehen. Man erkennt in Fig. 2, daß die Verbindungselemente 17, 18 als miteinander in Eingriff bringbare hakenartige Elemente ausgeführt sind.

Insbesondere Fig. 1, 2 und 6 lassen dabei besonders gut erkennen, daß die Verbindungselemente 17 der Ventileinheiten 3, den lösbaren Eingriff realisierend, elastisch federnd ausgebildet sind und durch Druck auf eine Fingertaste 19 zurückgedrückt und aus den gegenüberliegenden Verbindungselementen 18 herausgehoben werden können.

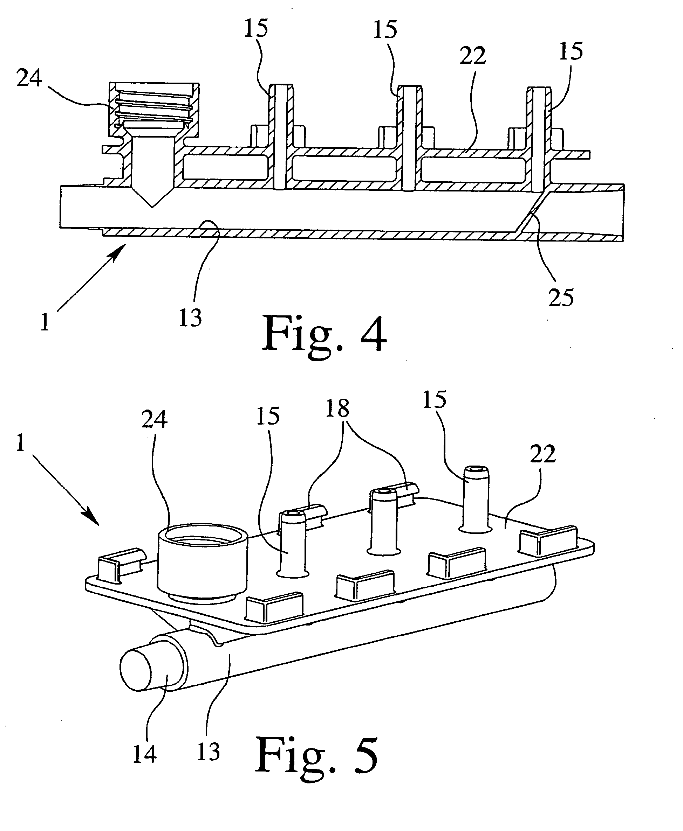

Fig. 5 zeigt wie die Verbindungselemente 18 an der Verteilerschiene 1 zweckmäßig angeordnet sein können, so daß sich eine Verdrehsicherung für die Ventileinheit 3 auf der Verteilerschiene 1 ergibt. All diese konstruktiven Besonderheiten sind bereits bei der im Stand der Technik bekannten Dosiereinrichtung verwirklicht worden, so daß auf den einleitend erläuterten Stand der Technik hingewiesen werden darf.

Grundsätzlich wäre es möglich, daß die mechanische Tragkonstruktion mechanische Verbindungselemente aufweist, mit denen die mechanischen, vorzugsweise an den Ventileinheiten angeordneten Verbindungselemente der Dosiereinheiten lösbar in Eingriff stehen. Dies ist allerdings in den Zeichnungen nicht dargestellt. Dort ist vielmehr dargestellt, daß die mechanische Tragkonstruktion 16 weitere mechanische Verbindungselemente 20 aufweist, die mit Gegenelementen 21 an der Verteilerschiene 1 lösbar in Eingriff stehen. Man erkennt das in Fig. 1 und die Gegenelemente 21 als Ränder der Verteilerschiene 1 in Fig. 2. Fig. 1 zeigt dabei eine besondere konstruktive Maßnahme dergestalt, daß rechts eine federnde Raste 20' eines der gegenüberliegenden mechanischen Verbindungselemente 20 bildet. Diese federnde Raste 20' als Verbindungselement fixiert die Verteilerschiene 1 sicher an der mechanischen Tragkonstruktion 16.

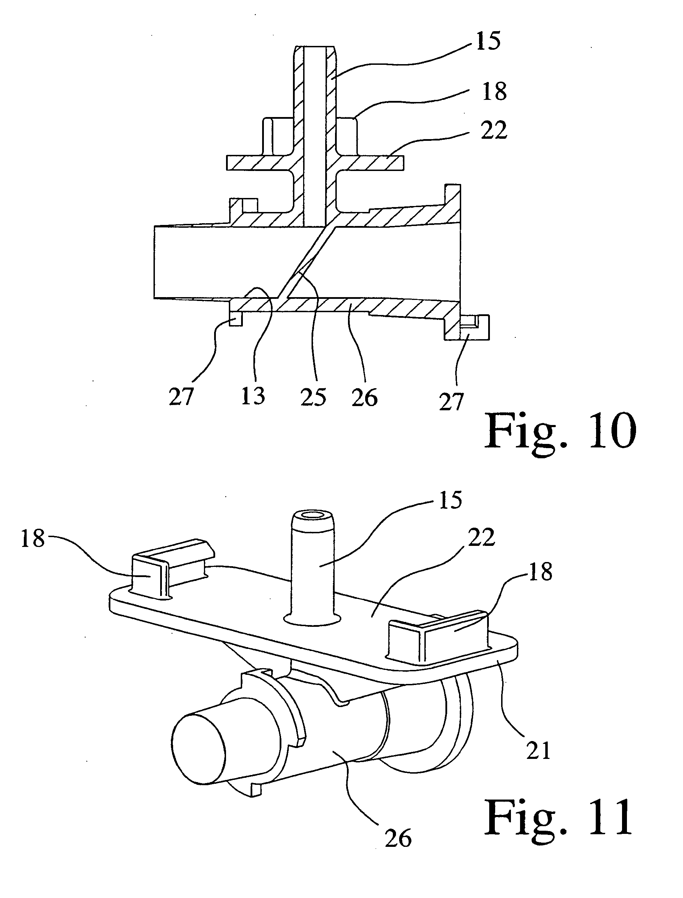

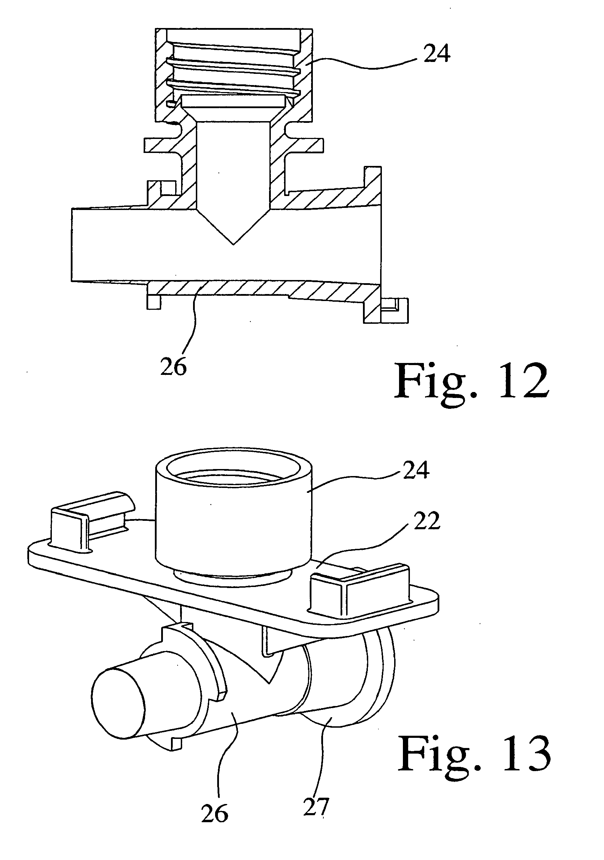

Die in der Zeichnung dargestellten Ausführungsbeispiele stimmen darin überein, daß die jeweils dargestellte Verteilerschiene 1 auch die mechanischen Verbindungselemente 18 zu den Ventileinheiten 3 aufweist. Regelmäßig ist dazu vorgesehen, daß die Verteilerschiene 1 eine angeformte Plattform 22 aufweist, auf der sich die Dosiereinheitsanschlüsse 15 und hier auch die mechanischen Verbindungselemente 18 befinden. Dies erkennt man besonders gut in Fig. 2 und 5 und entsprechend Fig. 11 und 13.

Fig. 2 zeigt die Verteilerschiene 1 als insgesamt aus Kunststoff hergestelltes, vorzugsweise im Spritzgußverfahren hergestelltes Bauteil, an dem der nach oben abragende Dosiereinheitsanschluß 15 auf der Plattform 22 und seitlich die hakenartigen mechanischen Verbindungselemente 18 sowie die randseitig vorspringenden Gegenelemente 21 zur Anbringung in der mechanischen Tragkonstruktion 16 angeformt sind. Die Verbindungselemente 17, 18 einerseits sowie die Verbindungselemente 20 mit den Gegenelementen 21 andererseits sind hier als formschlüssig wirkende Bajonettverbindungen ausgeführt. Alternativ (hier nicht dargestellt) können sie als Schraubverbindungen oder kraftschlüssige Klemmverbindungen ausgeführt werden. Unten in Fig. 2 erkennt man die in Längsrichtung verlaufende Fluidzufuhrleitung 13.

Den Ausführungsbeispielen von Fig. 1, 3, 5 und Fig. 8, 9 ist gemeinsam, daß an der Verteilerschiene 1 ein Druckausgleichsbehälter 23 angeordnet ist, der über einen Behälteranschluß 24 mit der Fluidzufuhrleitung 13 in lösbarer hydraulischer Verbindung steht. Vorzugsweise ist der Behälteranschluß 24 zwischen dem Zulaufanschluß 14 und dem ersten Dosiereinheitsanschluß 15 angeordnet ist. Im dargestellten und insoweit bevorzugten Ausführungsbeispiel ist dabei vorgesehen, daß der Behälteranschluß 24 auch der lösbaren mechanischen Verbindung des Druckausgleichsbehälters 23 mit der Verteilerschiene 1 dient. Er ist dazu hier als Schraubanschluß ausgeführt ist (Fig. 4).

Grundsätzlich ist es möglich, wie eingangs bereits erläutert worden ist, daß die Fluidzufuhrleitung 13 am vom Zulaufanschluß 14 fernen Ende offen und mit einem entsprechenden Anschluß versehen ist. Dann ist die Dosiereinrichtung insgesamt in ein Kreislaufsystem einbaubar, Die hier dargestellten Ausführungsbeispiele zeigen aber alle eine Ausführung, bei der die Fluidzufuhrleitung 13 am vom Zulaufanschluß 14 fernen Ende geschlossen ist. Fig. 3 zeigt dabei, daß das Schließen mit einer in der Fluidzufuhrleitung 13 schräg angeordneten Prallwand 25 realisiert worden ist, so daß sich eine totraumfreie Umlenkung der Flüssigkeitsströmung nach oben in den Dosiereinheitsanschluß 15 am rechten Ende der Fluidzufuhrleitung 13 ergibt. Auch das ist eine Besonderheit für den erfindungsgemäß relevanten Einsatzzweck.

Bereits eingangs ist darauf hingewiesen worden, daß es bei der Dosiereinrichtung für Flüssigkeiten im Grunde darum geht, eine vollständige Auswechselbarkeit der Teile der Dosiereinrichtung zu realisieren, Das wird hier dadurch erreicht, daß die Kolben-Zylinder-Einheiten 8 als Austauschteile aus vorzugsweise recyclingfähigem, vorzugsweise spritzgießfähigem Kunststoff ausgebildet und auf den Ventileinheiten 3 schnell, sicher, dicht und lösbar und vorzugsweise ohne das Erfordernis von Werkzeugen montierbar und demontierbar angeordnet sind und die Ventileinheiten 3 als Austauschteile aus vorzugsweise recyclingfähigem, vorzugsweise spritzgießfähigem Kunststoff ausgebildet sind, wobei einzelne Einbauteile der Ventileinheiten 3 ggf. aus anderen Werkstoffen als Kunststoff bestehen können.

Das Ausführungsbeispiel von Fig. 1-5 zeigt eine zusammenhängende, einstückige Verteilerschiene 1 aus recyclingfähigem, spritzgießfähigem Kunststoff, die nicht der Erfindung entspricht. Das ist eine vergleichsweise teure Konzeption, denn das Werkzeug, das hierfür notwendig ist, ist groß, komplex und individuell für die Anzahl der Anschlüsse.

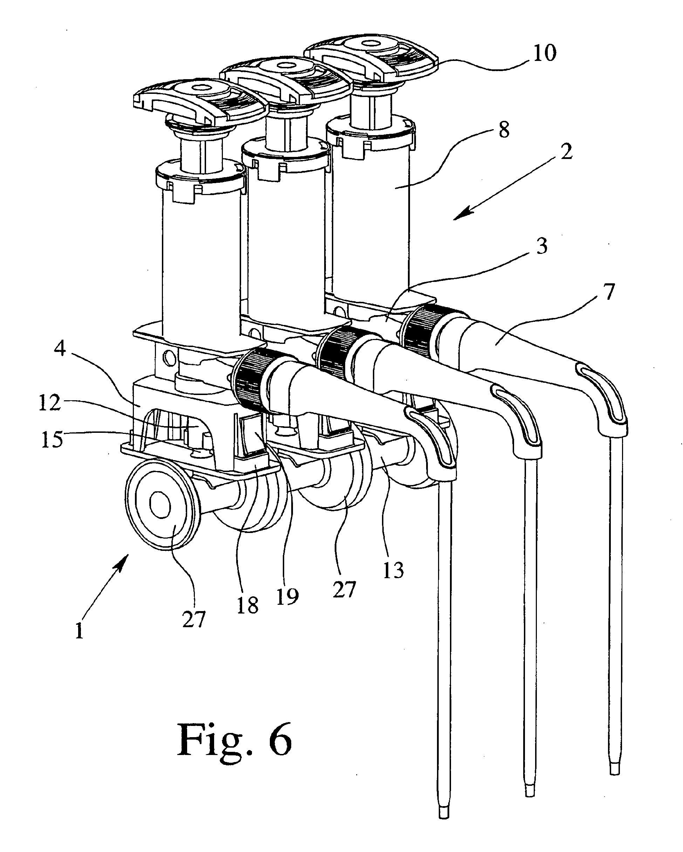

Die Ausführungsbeispiele von Fig. 6-7 und Fig. 8-13 zeigen demgegenüber eine segmentierte, also modulartig zusammengebaute Verteilerschiene 1. Diese entspricht der Erfindung. Vorgesehen ist hier, daß die Verteilerschiene 1 aus einzelnen Schienensegmenten 26 zusammengefügt ist. Man kann so eine Dosiereinrichtung praktisch beliebig lang machen, also eine grundsätzlich beliebige Anzahl von Schienensegmenten 26 miteinander modulartig verbinden, um eine entsprechend große Anzahl von Dosiereinheiten 2 berücksichtigen zu können.

Grundsätzlich kann man die getrennt hergestellten Schienensegmente 26 im weiteren Verlauf der Fertigung durch dauerhaft wirkende Verbindungstechniken wie Löten, Schweißen oder Kleben dauerhaft unlösbar zu einer kompletten Verteilerschiene 1 verbinden.

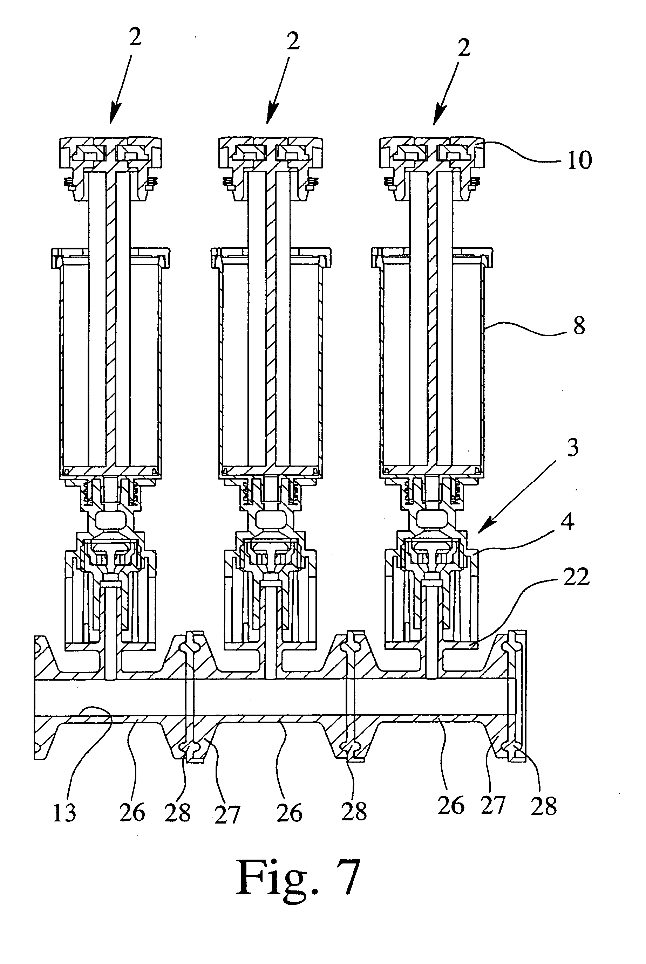

Das in Fig. 6 und 7 dargestellte Ausführungsbeispiel zeigt eine Konstruktion, bei der die Schienensegmente 26 über angeformte tellerförmige Flansche 27 derart miteinander verbunden sind, daß im Inneren eine praktisch spaltfreie Fluidzufuhrleitung 13 gebildet ist. Bei dem hier dargestellten Ausführungsbeispiel, siehe insbesondere Fig. 7, wird dies dadurch erreicht, daß sich zwischen den Flanschen 27 maßgenau geformte und positionierte, chemikalienbeständige Dichtungsscheiben 28 befinden. Die Flansche 27 können durch außen angesetzte Klemmbügel mit axial bzgl. der Fluidzufuhrleitung 13 ausgeübter Kraft miteinander verspannt werden. Das ist eine übliche Befestigungstechnik.

Für die Verteilerschiene 1 kann man beispielsweise Polypropylen, verstärktes Polypropylen oder in besonderen Fällen auch PEEK verwenden. Beispiele für die Materialien der Dichtungsscheiben 28 sind silikonbasierte Dichtkunststoffe oder EPDM.

Die Dichtungsscheiben 28 können auch an einem der beiden beteiligten Flansche 27 angespritzt sein. Das läßt Fig. 7 rechts am Ende erkennen. Dafür eignet sich ein Zweikomponenten-Spritzgußverfahren.

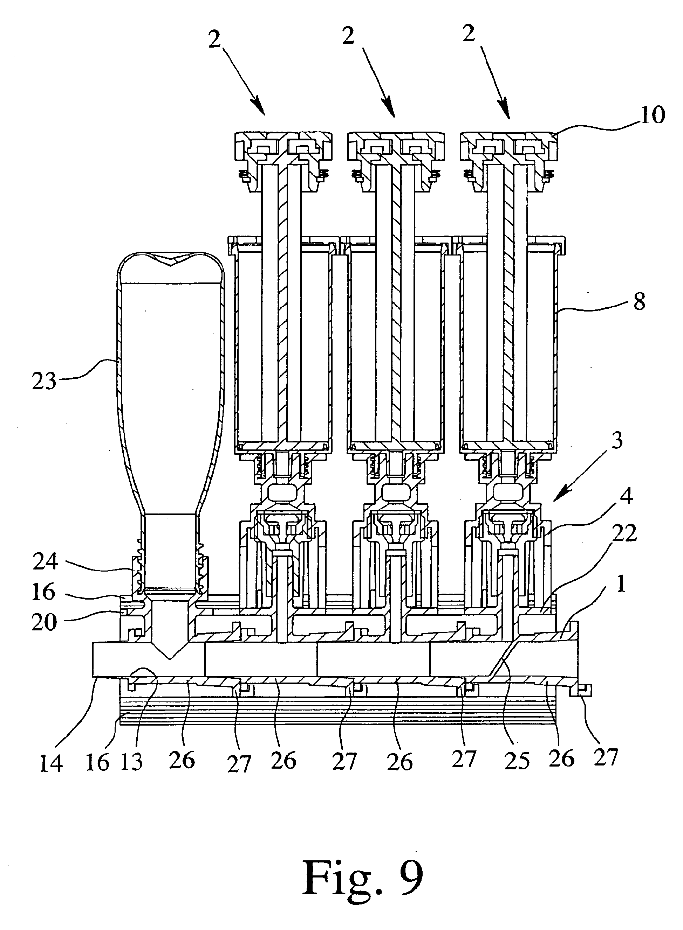

Bei dem in Fig. 8 ff. dargestellten Ausführungsbeispiel ist die spaltfreie Gestaltung der Fluidzufuhrleitung 13 durch eine entsprechende Ausgestaltung der Schienensegmente 26, die ineinander steckbar sind, realisiert worden. Man erkennt das am Schnitt in Fig. 10 besonders gut. Die Wandung des Schienensegments 26 in Fig. 10 läuft nach links hin in einem dünnwandigen Ende aus, so daß sich aufgrund der entsprechenden konischen Schräge (rechts in Fig. 10) die Einfügung der beiden Wände benachbarter Schienensegmente 26 realisieren läßt. Hier erfolgt die Verbindung benachbarter Schienensegmente 26 dichtungslos über als Bajonettflansche ausgeführte Flansche 27, so daß externe Klemmbügel o.dgl. nicht erforderlich sind. Man erkennt das besonders gut in Fig. 9.

Den Abbildungen der zuletzt erörterten zwei Ausführungsbeispiele entnimmt man insgesamt, daß die Schienensegmente 26 weitgehend gleich ausgeführt sind, so daß sie auf einem Kunststoff-Spritzwerkzeug, ggf. nur mit veränderten Schiebern, herstellbar sind. Man erkennt beispielsweise in Fig. 10, die das rechts liegende Abschlußsegment der Verteilerschiene 1 zeigt, daß hier durch Einsatz entsprechender Schieber die bereits erörterte Prallwand 25 im Inneren der Fluidzufuhrleitung 13 ausgebildet ist. An sich überflüssigerweise ist rechts der Bajonettflansch 27 angeformt, das liegt aber eben an der Nutzung desselben Werkzeugs wie für die normalen Schienensegmente 26.

Ebenso erkennt man bei der Darstellung in Fig. 12 und 13, daß hier im oberen Bereich durch die Ausbildung des Behälteranschlusses 24 Änderungen am Werkzeug erforderlich waren. Im übrigen ist aber das übliche Werkzeug genutzt worden, so daß hier auch die Plattform 22 mit den hakenartigen Verbindungselementen 18 realisiert ist.

Das dargestellte Ausführungsbeispiel zeigt im übrigen den Behälteranschluß 24 als Schraubanschluß für den beispielsweise in Fig. 9 erkennbaren Druckausgleichsbehälter 23 aus Kunststoff. Andere Anschlußtechniken, also form- oder reibschlüssige Varianten, sind möglich.

Nicht dargestellt ist eine Variante, bei der man den Druckausgleichsbehälter 23 am entsprechenden Schienensegment 26 gleich mit ausformt.

Bei der in Fig. 8 dargestellten Dosiereinrichtung handelt es sich um das Austauschteil wie es verpackt und steril bereitgestellt werden kann. Diese Baugruppe kann neben den abgebildeten Kolben-Zylinder-Einheiten 2, den Ventileinheiten 3 und der Verteilerschiene 1 auch einen Druckausgleichsbehälter 23 umfassen. Dieses komplette Austauschteil wird nur am Zulaufanschluß 14 hydraulisch angekoppelt. Selbst letztere Stelle potentieller Kontamination könnte durch einen verlängerten Zulaufanschluß als einstückige oder vormontierte, sterilisierte Leitung, die außerhalb des Sterilraums angeschlossen wird, eliminiert werden. Das Austauschteil wird in mechanischer Hinsicht am Ende der Kolbenstangen 9 der Zylinder-Kolben-Anordnungen 2 mit der Koppeleinrichtung der motorischen Antriebseinrichtung der Dosieranlage verbunden. Außerdem wird es an der Plattform 22 mit der Tragkonstruktion 16 mechanisch verbunden.

Das Ausführungsbeispiel von Fig. 9 läßt in der dortigen Darstellung die Existenz der mechanischen Tragkonstruktion 16 erkennen. Hier kann man insgesamt wieder auf Fig. 1 zurückgreifen. Auch bei der in den erörterten Ausführungsbeispielen verwirklichten segmentierten Ausführungen der Verteilerschiene 1 haben die einzelnen Schienensegmente 26 entsprechende Plattformen 22, sehen also im Schnitt im Grunde so aus, wie das in Fig. 2 gezeigt ist.

Nun könnte man die Plattformen 22 eine nach der anderen in Längsrichtung in entsprechende Schienen der Tragkonstruktion 16 einschieben. Diese Schienen würden dann die mechanischen Verbindungselemente 20 an der Tragkonstruktion 16 bilden. Das könnte in Längsrichtung erfolgen, entsprechende Schienen könnten aber auch jeweils einzelne Fächer bildend in Querrichtung angeordnet sein. Einfacher ist die Befestigung der Schienensegmente 26 in der mechanischen Tragkonstruktion 16 allerdings mit der in Fig. 1 gezeigten Schnappkonstruktion.

Grundsätzlich ist auch eine weitere Variante der mechanischen Verbindungstechnik realisierbar, die in der Zeichnung nicht dargestellt ist. Bei dieser bajonettartigen Verbindungstechnik wird eine in der Ebene der Plattform verlaufende Verschiebebewegung realisiert, die eine Verriegelung oder Entriegelung zur Folge hat.

## Patentansprüche

1. Dosiereinrichtung für Flüssigkeiten
mit einer Verteilerschiene (1) und mehreren mit der Verteilerschiene (1) hydraulisch verbundenen Dosiereinheiten (2) für die Flüssigkeit,
wobei jede Dosiereinheit (2) eine Ventileinheit (3) sowie eine auf der Ventileinheit (3) lösbar angeordnete Kolben-Zylinder-Einheit (8) zum Ansaugen und dosierten Ausstoßen der Flüssigkeit aufweist,
wobei jede Ventileinheit (3) ein hydraulisches Anschlußelement (12) zum lösbaren hydraulischen Anschließen an die Verteilerschiene (1) aufweist, wobei die Verteilerschiene (1) eine langgestreckte Fluidzufuhrleitung (13) aufweist, die endseitig einen Zulaufanschluß (14) für die Flüssigkeit und seitlich über die Länge verteilt vorzugsweise gleich beabstandet angeordnete Dosiereinheitsanschlüsse (15) aufweist, die mit den hydraulischen Anschlußelementen (12) der Dosiereinheiten (2) lösbar gekuppelt sind,
**dadurch gekennzeichnet**,
dass die Verteilerschiene (1) als Austauschteil aus einem Kunststoff ausgebildet und aus einzelnen Schienensegmenten (26) zusammengefügt ist, und dass die Anschlüsse der Schienensegmente (26) als fluiddichte Steck- und/oder Flanschverbindungselemente ausgeführt sind.

2. Dosiereinrichtung nach Anspruch 1, **dadurch gekennzeichnet**,
dass die Schienensegmente (26) derart miteinander verbunden sind, dass im Inneren eine praktisch spaltfreie Fluidzufuhrleitung (13) gebildet ist.

3. Dosiereinrichtung nach Anspruch 1 oder 2, **dadurch gekennzeichnet**,
dass die Schienensegmente (26) weitgehend gleich ausgeführt sind, so dass sie auf einem Kunststoff-Spritzwerkzeug herstellbar sind und/oder die Anschlüsse der Schienensegmente (26) separate oder direkt im Zweikomponenten-Spritzgußverfahren angeformte Dichtelemente aufweisen.

4. Dosiereinrichtung nach einem der Ansprüche 1 bis 3, **dadurch gekennzeichnet**,
dass die Verteilerschiene (1) in einer mechanischen, vorzugsweise als Wanne oder Schiene ausgebildeten, langgestreckten Tragkonstruktion (16) lösbar angebracht ist und
dass, vorzugsweise, die mechanische Tragkonstruktion (16) als nicht zum Wegwerfen bestimmtes Bauteil aus Metall oder Kunststoff ausgeführt ist.

5. Dosiereinrichtung nach einem der Ansprüche 1 bis 4, **dadurch gekennzeichnet**,
dass jede Dosiereinheit (2) mindestens ein mechanisches Verbindungselement (17) zum lösbaren mechanischen Befestigen an der Verteilerschiene (1) oder an der Tragkonstruktion (16) aufweist und
dass, vorzugsweise, die Verteilerschiene (1) mechanische Verbindungselemente (18) aufweist, mit denen die mechanischen Verbindungselemente (17) der Dosiereinheiten (2) lösbar in Eingriff stehen.

6. Dosiereinrichtung nach einem der Ansprüche 1 bis 5, **dadurch gekennzeichnet**,
dass die Verteilerschiene (1) eine angeformte Plattform (22) aufweist, auf der sich die Dosiereinheitsanschlüsse (15) und, vorzugsweise, die mechanischen Verbindungselemente (18) befinden.

7. Dosiereinrichtung nach einem der Ansprüche 1 bis 6, **dadurch gekennzeichnet**,
dass an der Verteilerschiene (1) ein Druckausgleichsbehälter (23) angeordnet ist, der über einen Behälteranschluß (24) mit der Fluidzufuhrleitung (13) in lösbarer hydraulischer Verbindung steht, und
dass, vorzugsweise, der Behälteranschluß (24) zwischen dem Zulaufanschluß (14) und dem ersten Dosiereinheitsanschluß (15) angeordnet ist,
wobei, vorzugsweise, der Behälteranschluß (24) auch der lösbaren mechanischen Verbindung des Druckausgleichsbehälters (23) mit der Verteilerschiene (1) dient.

8. Dosiereinrichtung nach Anspruch 7, **dadurch gekennzeichnet**,
dass das dem Druckausgleichsbehälter (23) zugeordnete Schienensegment (26) mit dem Druckausgleichsbehälter (23) einstückig ausgeführt ist.

9. Dosiereinrichtung nach Anspruch 5 oder 6, **dadurch gekennzeichnet**,
dass die mechanischen Verbindungselemente (17; 18) als Bajonett-, Klemm- oder Schraubverbindungselemente ausgeführt sind.

10. Verteilerschiene für eine Dosiereinrichtung für Flüssigkeiten nach einem der Ansprüche 1 bis 9,
wobei sie eine langgestreckte Fluidzufuhrleitung (13) aufweist, die endseitig einen Zulaufanschluß (14) für die Flüssigkeit und seitlich über die Länge verteilt vorzugsweise gleich beabstandet angeordnete Dosiereinheitsanschlüsse (15) aufweist, **dadurch gekennzeichnet**,
dass sie als Austauschteil aus einem Kunststoff ausgebildet und aus einzelnen Schienensegmenten (26) zusammengefügt ist, und dass die Anschlüsse der Schienensegmente (26) als fluiddichte Steck- und/oder Flanschverbindungselemente ausgeführt sind.

11. Verteilerschiene nach Anspruch 10, **dadurch gekennzeichnet**,
dass sie mechanische Verbindungselemente (18) aufweist, mit denen mechanische Verbindungselemente (17) von Dosiereinheiten (2) lösbar in Eingriff bringbar sind,
wobei, vorzugsweise, die mechanischen Verbindungselemente (18) als Rastverbindungselemente oder als bajonettartige Drehverbindungselemente ausgeführt sind.

12. Verteilerschiene nach Anspruche 10 oder 11, **dadurch gekennzeichnet**,
dass die Fluidzufuhrleitung (13) am vom Zulaufanschluß (14) fernen Ende geschlossen ist.

13. Verteilerschiene nach einem der Ansprüche 10 bis 12, **dadurch gekennzeichnet**,
dass die Schienensegmente (26) derart miteinander verbunden sind, dass im Inneren eine praktisch spaltfreie Fluidzufuhrleitung (13) gebildet ist und/oder die Schienensegmente (26) weitgehend gleich ausgeführt sind, so dass sie auf einem Kunststoff-Spritzwerkzeug herstellbar sind.

14. Schienensegment einer Verteilerschiene (1) für eine Dosiereinrichtung für Flüssigkeiten nach einem der Ansprüche 10 bis 13, **dadurch gekennzeichnet, dass** es als Austauschteil aus einem Kunststoff ausgebildet ist und
dass die Anschlüsse der Schienensegmente (26) als fluiddichte Steck- und/oder Flanschverbindungselemente ausgeführt sind.

15. Schienensegmente einer Verteilerschiene (1) für eine Dosiereinrichtung für Flüssigkeiten nach Anspruch 14, **dadurch gekennzeichnet**,
dass die Anschlüsse der Schienensegmente (26) separate oder direkt im Zweikomponenten-Spritzgußverfahren angeformte Dichtelemente aufweisen und /oder
mit einem benachbarten Schienensegment derart verbindbar ist, dass im Inneren eine praktisch spaltfreie Fluidzufuhrleitung (13) gebildet wird.

## Claims

1. Dosing device for liquids,
with a distributor rail (1) and a plurality of dosing units (2) for the liquid that are hydraulically connected to the distributor rail (1),
wherein each dosing unit (2) has a valve unit (3) and, detachably arranged on the valve unit (3), a piston-cylinder unit (8) for drawing in and measured discharging of the liquid,
wherein each valve unit (3) has a hydraulic connection element (12) for detachable hydraulic connection to the distributor rail (1),
wherein the distributor rail (1) has an elongate fluid supply line (13), which has at its end a supply connection (14) for the liquid and has dosing unit connections (15) distributed laterally along its length, preferably arranged with equidistant spacing, which dosing unit connections are detachably coupled to the hydraulic connection elements (12) of the dosing units (2),
**characterised**
in that the distributor rail (1) is designed as a replaceable part made of plastic, and is assembled from individual rail segments (26), and in that the connections of the rail segments (26) are designed as fluid-impervious plug connection elements and/or flange connection elements.

2. Dosing device according to Claim 1,
**characterized**
in that the rail segments (26) are interconnected such that a practically gap-free fluid supply line (13) is formed in the interior.

3. Dosing device according to Claim 1 or 2,
**characterized**
in that the rail segments (26) are designed to be largely the same, such that they can be produced on one plastic-molding tool and/or the connections of the rail segments (26) have separately molded-on sealing elements or sealing elements molded on directly using the two-component injection-molding method.

4. Dosing device according to one of Claims 1 to 3,
**characterized**
in that the distributor rail (1) is detachably attached to a mechanical, elongate support structure (16), preferably designed as a tub or rail, and in that, preferably, the mechanical support structure (16) is designed as a component made of metal or plastic that is not designed to be discarded.

5. Dosing device according to one of Claims 1 to 4,
**characterized**
in that each dosing unit (2) has at least one mechanical connection element (17) for detachable mechanical attachment to the distributor rail (1) or to the support structure (16), and in that, preferably, the distributor rail (1) has mechanical connection elements (18) detachably engaged with the mechanical connection elements (17) of the dosing units (2).

6. Dosing device according to one of Claims 1 to 5,
**characterized**
in that the distributor rail (1) has a platform (22) molded thereto, on which the dosing unit connections (15) and, preferably, the mechanical connection elements (18) are located.

7. Dosing device according to one of Claims 1 to 6,
**characterized**
in that arranged on the distributor rail (1) there is a pressure-equalizing container (23), which has a detachable hydraulic connection to the fluid supply line (13) via a container connection (24), and
in that, preferably, the container connection (24) is arranged between the supply connection (14) and the first dosing unit connection (15) wherein, preferably, the container connection (24) also serves for the detachable mechanical connection between the pressure-equalizing container (23) and the distributor rail (1).

8. Dosing device according to Claim 7, **characterized in that** the rail segment (26) associated with the pressure-equalizing container (23) is of integral design with the pressure-equalizing container (23).

9. Dosing device according to Claim 5 or 6,
**characterized**
in that the mechanical connection elements (17; 18) are designed as bayonet, clamping or screw connection elements.

10. A distributor rail for a dosing device for liquids according to one of Claims 1 to 9,
wherein it has an elongate fluid supply line (13), which has at its end side a supply connection (14) for the liquid and has dosing unit connections (15) distributed laterally along its length, preferably arranged with equidistant spacing, **characterized**
in that it is designed as a replaceable part made of plastic and is assembled from individual rail segments (26), and in that the connections of rail segments (26) are designed as fluid-impervious plug connection elements and/or flange connection elements.

11. Distributor rail according to Claim 10,
**characterized**
in that it has mechanical connection elements (18) which can be detachably engaged with mechanical connection elements (17) of dosing units (2), wherein, preferably, the mechanical connection elements (18) are designed as latching connection elements or as bayonet-type swivel-connecting elements.

12. Distributor rail according to Claim 10 or 11,
**characterized**
in that the fluid supply line (13) is closed off at the end away from the supply connection (14).

13. Distributor rail according to one of Claims 10 to 12,
**characterized**
in that the rail segments (26) are interconnected such that a practically gap-free fluid supply line (13) is formed in the interior, and/or the rail segments (26) largely have the same design, such that they can be produced on one plastic-molding tool.

14. Rail segment of a distributor rail (1) for a dosing device for liquids according to one of Claims 10 to 13, **characterized**
in that it is designed as a replaceable part made of plastic, and in that the connections of the rail segments (26) are designed as fluid-impervious plug connection elements and/or flange connection elements.

15. Rail segment of a distributor rail (1) for a dosing device for liquids according to Claim 14,
**characterized**
in that the connections of the rail segments (26) have separately molded-on sealing elements or sealing elements molded on directly using the two-component injection-molding method and/or can be connected to an adjacent rail segment such that a practically gap-free fluid supply line (13) is formed in the interior.

## Revendications

1. Dispositif de dosage de liquides comprenant un rail de distribution (1) et plusieurs unités de dosage (2) pour le liquide connectées hydrauliquement au rail de distribution (1), chaque unité de dosage (2) présentant une unité de soupape (3) ainsi qu'une unité cylindre-piston (8) disposée de manière amovible sur l'unité de soupape (3) pour aspirer et éjecter de manière dosée le liquide, chaque unité de soupape (3) présentant un élément de raccord hydraulique (12) pour le raccord hydraulique amovible au rail de distribution (1), le rail de distribution (1) présentant une conduite d'alimentation en fluide allongée (13) qui présente du côté de l'extrémité un raccord d'alimentation (14) pour le liquide et des raccords d'unités de dosage (15), répartis latéralement sur la longueur, de préférence de manière équidistante, qui sont accouplés de manière amovible aux éléments de raccord hydraulique (12) des unités de dosage (2), **caractérisé en ce que**
le rail de distribution (1) est réalisé sous forme de pièce remplaçable en plastique et est assemblé à partir de segments de rail individuels (26), et **en ce que** les raccords des segments de rail (26) sont réalisés sous forme d'éléments de connexion enfichables et/ou à bride étanches aux fluides.

2. Dispositif de dosage selon la revendication 1, **caractérisé en ce que** les segments de rail (26) sont connectés les uns aux autres de telle sorte qu'une conduite d'alimentation en fluide pratiquement sans interstice (13) soit formée à l'intérieur.

3. Dispositif de dosage selon la revendication 1 ou 2, **caractérisé en ce que** les segments de rail (26) sont réalisés essentiellement de manière identique de telle sorte qu'ils puissent être fabriqués sur un outil d'injection de plastique et/ou les raccords des segments de rail (26) présentent des éléments d'étanchéité séparés ou formés directement dans un procédé de moulage par injection à deux composants.

4. Dispositif de dosage selon l'une quelconque des revendications 1 à 3, **caractérisé en ce que** le rail de distribution (1) est monté de manière amovible dans une construction porteuse mécanique allongée (16), de préférence réalisée sous forme de cuvette ou de rail, et **en ce que** de préférence, la construction porteuse mécanique (16) est réalisée sous forme de composant en métal ou en plastique prévu pour ne pas être jetable.

5. Dispositif de dosage selon l'une quelconque des revendications 1 à 4, **caractérisé en ce que** chaque unité de dosage (2) présente au moins un élément de connexion mécanique (17) pour la fixation mécanique amovible au rail de distribution (1) ou à la construction porteuse (16) et **en ce que** de préférence le rail de distribution (1) présente des éléments de connexion mécaniques (18) avec lesquels les éléments de connexion mécaniques (17) des unités de dosage (2) sont en prise de manière amovible.

6. Dispositif de dosage selon l'une quelconque des revendications 1 à 5, **caractérisé en ce que** le rail de distribution (1) présente une plate-forme formée (22) sur laquelle se trouvent les raccords d'unités de dosage (15) et, de préférence, les éléments de connexion mécaniques (18).

7. Dispositif de dosage selon l'une quelconque des revendications 1 à 6, **caractérisé en ce qu'**un récipient d'équilibrage de la pression (23) est disposé sur le rail de distribution (1), lequel est en liaison hydraulique amovible par le biais d'un raccord de récipient (24) avec la conduite d'alimentation en fluide (13), et **en ce que** de préférence, le raccord de récipient (24) est disposé entre le raccord d'alimentation (14) et le premier raccord d'unités de dosage (15), le raccord de récipient (24) servant de préférence également à la connexion mécanique amovible du récipient d'équilibrage de la pression (23) au rail de distribution (1).

8. Dispositif de dosage selon la revendication 7, **caractérisé en ce que** le segment de rail (26) associé au récipient d'équilibrage de la pression (23) est réalisé d'une seule pièce avec le récipient d'équilibrage de la pression (23).

9. Dispositif de dosage selon la revendication 5 ou 6, **caractérisé en ce que** les éléments de connexion mécaniques (17 ; 18) sont réalisés sous forme d'éléments de connexion à baïonnette, par serrage, ou par vissage.

10. Rail de distribution pour un dispositif de dosage de liquides selon l'une quelconque des revendications 1 à 9, présentant une conduite d'alimentation en fluide allongée (13) qui présente du côté de l'extrémité un raccord d'alimentation (14) pour le liquide et des raccords d'unités de dosage (15) répartis latéralement sur la longueur, de préférence de manière équidistante, **caractérisé en ce qu'**il est réalisé sous forme de pièce remplaçable en plastique et est assemblé à partir de segments de rail individuels (26), et **en ce que** les raccords des segments de rail (26) sont réalisés sous forme d'éléments de connexion enfichables et/ou à bride étanches aux fluides.

11. Rail de distribution selon la revendication 10, **caractérisé en ce qu'**il présente des éléments de connexion mécaniques (18) avec lesquels des éléments de connexion mécaniques (17) d'unités de dosage (2) peuvent être amenés en prise de manière amovible, les éléments de connexion mécaniques (18) étant de préférence réalisés sous forme d'éléments de connexion par encliquetage ou sous forme d'éléments de connexion rotatifs de type à baïonnette.

12. Rail de distribution selon la revendication 10 ou 11, **caractérisé en ce que** la conduite d'alimentation en fluide (13) est fermée à l'extrémité éloignée du raccord d'alimentation (14).

13. Rail de distribution selon l'une quelconque des revendications 10 à 12, **caractérisé en ce que** les segments de rail (26) sont connectés les uns aux autres de telle sorte qu'une conduite d'alimentation en fluide pratiquement sans interstice (13) soit formée à l'intérieur et/ou les segments de rail (26) sont réalisés essentiellement de manière identique de telle sorte qu'ils puissent être fabriqués sur un outil d'injection de plastique.

14. Segment de rail d'un rail de distribution (1) pour un dispositif de dosage de liquides selon l'une quelconque des revendications 10 à 13, **caractérisé en ce qu'**il est réalisé en tant que pièce remplaçable en plastique et **en ce que** les raccords des segments de rail (26) sont réalisés sous forme d'éléments de connexion enfichables et/ou à bride étanches aux fluides.

15. Segment de rail d'un rail de distribution (1) pour un dispositif de dosage de liquides selon la revendication 14, **caractérisé en ce que** les raccords des segments de rail (26) présentent des éléments d'étanchéité séparés ou formés directement dans un procédé de moulage par injection à deux composants et/ou peuvent être connectés à un segment de rail adjacent de telle sorte qu'une conduite d'alimentation en fluide pratiquement sans interstice (13) soit formée à l'intérieur.
